# EUROPÄISCHE PATENTSCHRIFT

(11) **EP 0 491 338 B1**
(45) Veröffentlichungstag und Bekanntmachung des Hinweises auf die Patenterteilung: **06.07.1994**
(21) Anmeldenummer: 91121559.8
(22) Anmeldetag: 16.12.1991
(51) Int. Cl.: B01D 5/00, F25D 21/12, F26B 25/00

(54) **Verfahren und Vorrichtung zur Rückgewinnung von Lösungs- mitteln**
Process and apparatus for solvent recuperation
Procédé et appareil pour la récupération de solvant

(30) Priorität: 17.12.1990 DE 4040390
(43) Veröffentlichungstag der Anmeldung: 24.06.1992
(73) Patentinhaber: HERCO-KÜHLTECHNIK HERMANNS & CO. GMBH, D-46474 Wesel (DE); AIR PRODUCTS GMBH, D-45527 Hattingen (DE)
(72) Erfinder: Karthaus, Michael, W-4040 Neuss (DE); Hermanns, Peter, Dr. rer. nat., W-4230 Wesel (DE); Hermanns, Klaus, Dr. rer. nat., W-4224 Hünxe 2 (DE); Kusenberg, Gerhard, W-4230 Wesel (DE); Hagenbruck, Norbert, W-4200 Oberhausen 11 (DE)
(74) Vertreter: Schwabe - Sandmair - Marx

(56) Entgegenhaltungen:
- FR-A- 2 328 163
- NL-A- 8 901 101

## Beschreibung

Die Erfindung betrifft ein Verfahren und eine Vorrichtung zur Rückgewinnung des Lösungsmittels aus einem Trägergas/Lösungsmittel-Gemisch.

Bei vielen industriellen Prozessen, beispielsweise beim Beschichten und Trocknen von Bändern, Folien usw. wie Audio- oder Videobänder entstehen Lösungsmitteldämpfe, die aufgefangen und rückgewonnen werden müssen, da sie meist in Mischung mit Luft explosibel und fast immer auch gesundheitsschädlich sind. In der Regel werden daher die Trockner, oft auch die Beschichter gekapselt, gegen den Zutritt von Luft abgeschirmt und unter einer inerten Atmosphäre z. B. Stickstoff gehalten. Gleichzeitig werden die Schleusen mit Inertgas versorgt. Hierdurch wird die Möglichkeit einer Explosion vermieden und der Austritt gesundheitsschädlicher Dämpfe verhindert.

Eine moderne Lösungsmittelrückgewinnungsanlage, wie sie beispielsweise aus der älteren europäischen Patentanmeldung EP-A-0 417 592 hervorgeht, hat deshalb in der Regel zwei zum Teil voneinander unabhängige Kreisläufe, nämlich
- einen Trägergaskreislauf, aus dem das Lösungmittel auskondensiert wird, und
- einen Tieftemperaturteil, mit dem die Schleusen der Fabrikationsanlage, beispielsweise eines Trockners, versorgt werden.

Aus der DE-A 35 01 643 ist ein Verfahren zur Rückgewinnung von Lösungsmitteln bei Reinigungsprozessen mit organischen Lösungsmitteln bekannt, bei dem die nach dem Abpumpen der flüssigen Lösungsmittelanteile in Form eines Gemisches aus Lösungsmitteldampf und Luft vorliegenden Lösungsmittel in einem Lösungsmittelkondensator durch Abkühlen teilweise auskondensiert werden. Die Rückgewinnung des bzw. der Lösungsmittel erfolgt durch Kondensation im Dampfraum eines Lösungsmittelkondensators durch Wärmeaustausch mit einem dabei verdampfenden Kältemittel. Das Kältemittel wird in einem geschlossenen Kreislauf über diesen Lösungsmittelkondensator bzw. Kältemittelverdampfer, einen Verdichter, einen Kältemittelverflüssiger und über ein Expansionsventil geführt.

Im Lösungsmittelkondensator werden überflüssige Lösungsmittelanteile kondensiert und einem Lösungsmittelvorratstank zugeführt. Der sich entsprechend dem Sättigungspartialdruck im Dampfraum des Lösungsmittelkondensators ansammelnde Lösungsmitteldampf gelangt anschließend in den Kältemittelverflüssiger und wird dort gegen das sich verflüssigende Kältemittel erwärmt.

Eine ähnliche Anordnung von Kältemittelverdampfer und -kondensator wird durch die GB-A 20 10 104 offenbart. Dabei sind der Kältemittelkondensator und der Kältemittelverdampfer jeweils in gasdichten Behältern untergebracht. Ein Flüssigkeitsgemisch mit einer flüchtigen, zurückzugewinnenden Komponente wird in den Behälter mit dem Kältemittelkondensator gegeben. Das Flüssigkeitsgemisch erwärmt sich im Wärmezustausch mit dem kondensierenden Kältemittel, die flüchtige Komponente verdampft und der Dampf wird in den anderen, den Kältemittelverdampfer enthaltenden Behälter geführt, wo die flüchtige Komponente wieder kondensiert. Die dabei dieser Komponente entzogene Wärme wird auf das im Kreislauf durch die beiden Behälter geführte Kältemittel übertragen.

Zwei im Wechsel betriebene Wärmetauscher, die in einer Anlage zur Rückgewinnung der in einem Benzin-Luft-Gemisch enthaltenen Kohlenwasserstoffe eingesetzt sind, gehen aus der DE-C 23 37 055 hervor. Das Benzin-Luft-Gemisch wird dabei in dem regenerierten der beiden wechselbaren Wärmetauscher soweit abgekühlt, daß durch Ausfrieren auch die nicht kondensierten Kohlenwasserstoffe und der restliche Wasserdampf von der Luft abgetrennt werden. Das Benzin-Luft-Gemisch wird vor seiner Abkühlung zur Regenierung des in einer früheren Schaltphase beladenen anderen Wärmetauschers zuerst diesem und dann dem regenierten Wärmetauscher zugeführt. Eine ähnliche Wärmetauscheranordnung für eine Lösungsmittelrückgewinnungsanlage ist auch aus der nicht vorveröffentlichten DE-A 39 30 239 bekannt.

Der Wechselbetrieb zweier Lösungsmittelkondensatoren zur Zurückgewinnung eines Stoffes in Dampfform aus einem Gas-Dampfgemisch ist ferner durch die NL-A 8 901 101 offenbart. Dabei wird das Gas-Dampfgemisch gegen ein gasförmiges Kühlmedium, wofür bspw. Stickstoff genannt ist, in zwei im Wechsel betriebenen Rohrbündelwärmeaustauschern gekühlt und der zurückzugewinnende Stoff dabei kondensiert. Das Kühlmedium wird mittels Kompressoren zwischen den beiden Kühlern umgewälzt. Um dem Zufrieren eines Kühlers vorzubeugen, wird das Kühlmedium außerhalb der Kühler durch einen gesonderten Wärmetauscher erwärmt und anschließend in einem Kompressor verdichtet, so daß es anschließend in einer eigens dafür vorgesehenen zusätzlichen Kühleinrichtung auf die richtige gewünschte Temperatur gebracht werden muß.

Wird, wie bei diesen bekannten, kontinuierlich betriebenen Lösungsmittelkondensatoren, ein Lösungsmittelkondensator eingesetzt, der kältemittelseitig als Einspritzverdampfer ausgebildet ist. bei dem also das Kältemittel in den Rohren des Verdampfers vollständig verdampft und das zu kühlende Fluid um die Rohre geführt wird, dann kann zwar die Menge des umlaufenden Kältemittels klein gehalten werden - nachteilig wirkt sich hingegen bei dieser Verdampferbauart die ungleichmäßige Verteilung des Kältemittels auf die Rohre und in den Rohren aus, mit der Folge, daß deren Oberflächentemperatur ebenso ungleichmäßig ist.

Neben dem Einspritzverdampfer ist in der Literatur, siehe Lueger, Lexikon der Technik von 1970, Band 16, der sogenannte überflutete Verdampfer bekannt, bei dem der Verdampferbehälter mit Kältemittel nahezu gefüllt ist und das zu kühlende Medium in einer Rohrschlange oder einem Rohrbündel im Verdampferbehälter durch das flüssige Kältemittel geführt wird. Der Kältemitteldampf wird am oberen Teil, meist über einen Dampfdom, abgesaugt.

Dem Einsatz eines oder mehrerer als überflutete Verdampfer ausgebildete Lösungsmittelkondensatoren in Lösungsmittelrückgewinnungsanlagen stand bisher die zum Abtauen notwendige lange Stillstandszeit solcher Verdampfer entgegen, was auf die im Vergleich zum Einspritzverdampfer große Kältemittelmenge im überfluteten Verdampfer zurückzuführen ist, die beim Übergang vom Betriebs- in den Abtauzustand vollständig verdampft werden muß. Die Umschaltzeiten müssen jedoch möglichst kurz gehalten werden, da während des Umschaltens das Lösungsmittel nicht ausreichend abgeschieden wird. Um vom Betriebs- in den Abtauzustand überzugehen, wird in der US-A 4 276 751 vorgeschlagen, am Ende des Betriebszyklus "heißes" Kältemittel in den Kältemittelraum des Verdampfers einzuführen und dadurch das für den Eisbildungsprozeß notwendige, gleiche, jedoch kältere Kältemittel aus dem Verdampfer zu drücken. Dies erfordert jedoch entsprechende Kreisläufe mit zusätzlichen Komponenten, wie beispielsweise Pumpen, für das auf zwei verschiedenen Temperaturniveaus befindliche Kältemittel. Darüber hinaus verbleibt nach wie vor das Problem, das flüssige, kalte Kältemittel zuvor vollständig verdampfen zu müssen.

Der Einsatz überfluteter Verdampfer ist im Zusammenhang mit der Rückgewinnung von Lösungsmitteln grundsätzlich aus der US-PS 4 857 565 bekannt. Dabei handelt es sich jedoch nicht um einen überfluteten Kältemittelverdampfer, sondern über einen Lösungsmittelverdampfer, in dem das Lösungsmittel aus einer Dispersion einer Trägerflüssigkeit und des Lösungsmittels durch Erhitzen verdampft wird.

Daß parallel geschaltete, überflutete Verdampfer in einer automatischen Eismaschine für die Eisbildung von Wasser verwendet werden können, ist aus der US-A 4 276 751 bekannt. In diesem Fall bietet sich die Ausbildung als überfluteter Kältemittelverdampfer bereits durch die gewünschte Eisbildung an. Dazu wird das notwendige Wasser in den Zellen eines Behältnisses vom Kältemittel umflutet und bis zur Eisbildung abgekühlt. Während der gesamten Abkühlung ruht das Wasser in den Zellen, die dem sich bildenden Eis dabei die gewünschte Form geben. Nach Abschluß eines jeden Eisbildungszyklus wird das Behältnis mit dem Eis von "heißem" Kältemittelgas umströmt, um das Eis aus seinen Zellen zu lösen. Der Natur der Eisbildung wegen wird diese Eismaschine zyklisch mit einem Eisbildungs- und einem Abtauzyklus betrieben. Demgegenüber ist Eisbildung bei einem Lösungsmittelkondensator für eine Lösungsmittelrückgewinnungsanlage, bei der das rückzugewinnende Lösungsmittel zweckmäßigerweise durch den Kondensator strömt, um den kontinuierlichen Betrieb der Anlage nicht durch das Entfernen des gefrorenen Lösungsmittel zu unterbrechen, unerwünscht.

Der Erfindung liegt die Aufgabe zugrunde, ein Verfahren und eine zu dessen Durchführung geeignete Vorrichtung zur Lösungsmittelrückgewinn zu schaffen, wobei die aus dem Stand der Technik bekannten Nachteile nicht auftreten; insbesondere soll bei einem Lösungsmittelkondensator eine möglichst gleichmäßige Temperaturverteilung auf den Wärmeaustauschflächen zwischen dem Kältemittel und dem Trägergas/Lösungsmittel-Gemisch gewährleistet und eine gute Regelung auch bei kleinen Temperatur- und Druckschwankungen ermöglicht werden. Ferner soll das Kältemittel innerhalb kurzer Zeit aus dem Lösungsmittelkondensator entfernt werden können.

Diese Aufgabe wird durch den Gegenstand der Ansprüche 1 und 6 gelöst.

Zweckmäßige Ausgestaltungen werden durch die Merkmale der Unteransprüche definiert.

Die mit der Erfindung erzielten Vorteile beruhen im wesentlichen darauf, daß das in den eines Rohren Lösungsmittelkondensators geführte Gemisch aus Trägergas und Lösungsmittel gleichmäßig vom flüssigen Kältemittel umgeben ist. So werden von allen vom Gemisch durchströmten Querschnitten bzw. Rohren die gleichen Wärmemengen übertragen. Dadurch wird erreicht, daß sich in allen Rohren in Strömungsrichtung die gleiche Temperaturverteilung einstellt, das Trägergas/Lösungsmittel-Gemisch also insbesondere an allen Rohrenden, bei deren Zusammenführung, die gleiche Temperatur aufweist. Gerade diese Eigenschaft verbessert die Abstimmung der einzelnen Komponenten der Lösungsmittelrückgewinnungsanlage aufeinander. Bei einem als Einspritzverdampfer ausgebildeten Lösungsmittelkondensator hingegen übertragen die das Kältemittel führenden Rohre, die als erste vom warmen Gemischstrom umflutet werden, größere Wärmemengen als die weiter stromauf liegenden Rohre, mit der Folge, daß an ihnen auch mehr Lösungsmittel kondensiert, wodurch sich im Raum des strömenden Gemisches wiederum eine nur ungenau vorhersagbare Temperaturverteilung ergibt.

Durch die Ausbildung des Lösungsmittelkondensators als überfluteter Verdampfer wird somit die Regelbarkeit des Kältemittelkreislaufs bei kleinsten Temperatur- und Druckschwankungen verbessert und eine erhöhte Berechnungs- und Einstellgenauigkeit der Austrittsbeladung des vom Trägergas/Lösungsmittel-Gemisch durchströmten Lösungsmittelkondensators erzielt.

Die oben beschriebenen Nachteile überfluteten Kältemittelverdampfern ausgebildeten Lösungsmittelkondensatoren werden durch die Merkmalsgruppe e) im Zusammenhang mit der Merkmalsgruppe c) des Anspruchs 1 vermieden.

Bei der Lösungsmittelrückgewinnung stellt sich ganz besonders das Problem, daß ein Lösungsmittelkondensator im Betrieb sich allmählich durch gefrierende Lösungsmittelanteile oder im Gemisch enthaltene Restfeuchtigkeit zusetzt und dadurch die geforderte Betriebskontinuität gefährdet.

Um das Zuwachsen des Lösungsmittelkondensators durch Ausfrieren des Lösungsmittels oder des darin enthaltenen Wassers zu verhindern, wird in der bereits erwähnten DE-A 39 30 239.3 vorgeschlagen, eine Lösungsmittelkondensator-Anordnung zur Rückgewinnung des Lösungsmittels aus einem Trägergas/Lösungsmittel-Gemisch einzusetzen, bei der jeweils einer von zwei Kondensatoren betrieben und der andere abgetaut wird, um Betriebsstörungen durch Zuwachsen des Lösungsmittelkreislaufs auszuschließen.

In einer besonders zweckmäßigen Form der Erfindung werden zumindest zwei als überflutete Verdampfer ausgebildete Lösungsmittelkondensatoren im Wechselbetrieb eingesetzt. Gerade dem Einsatz von im Wechsel betriebenen überfluteten Verdampfern stand die erwähnte lange Umschaltzeit von einem Verdampfer auf den anderen entgegen. Das Problem, das Kältemittel beim Umschalten der Lösungsmittelkondensatoren innerhalb kürzester Zeit von dem einen Verdampfer in den anderen zu verlagern, wird erfindungsgemäß unter Ausnutzung der im Trägergas/Lösungsmittel-Gemisch enthaltenen Enthalpie durch eine zweckmäßige Anordnung und Steuerung entsprechender Absperrmittel, insbesondere Ventile, des Kondensators/Verdampfers gelöst. Dabei ist besonders vorteilhaft der Kältemittelausgang eines überfluteten Verdampfers bzw. der überfluteten Verdampfer, falls mehrere solche, insbesondere im Wechsel betriebene Verdampfer zum Einsatz kommen, absperrbar.

Die Erfindung wird nachstehend anhand einer bevorzugten Ausführungsform unter Bezugnahme auf die Zeichnungen im einzelnen erläutert. Dabei werden weitere Vorteile und Merkmale der vorliegenden Erfindung offenbart. Es zeigen:
- Fig. 1: den schematischen Aufbau einer Lösungsmittelrückgewinnungsanlage; und
- Fig. 2: den schematischen Aufbau eines Lösungsmittelkondensators für eine Lösungsmittelrückgewinnungsanlage gemäß Fig. 1 mit zwei im Wechsel betriebenen überfluteten Verdampfern.

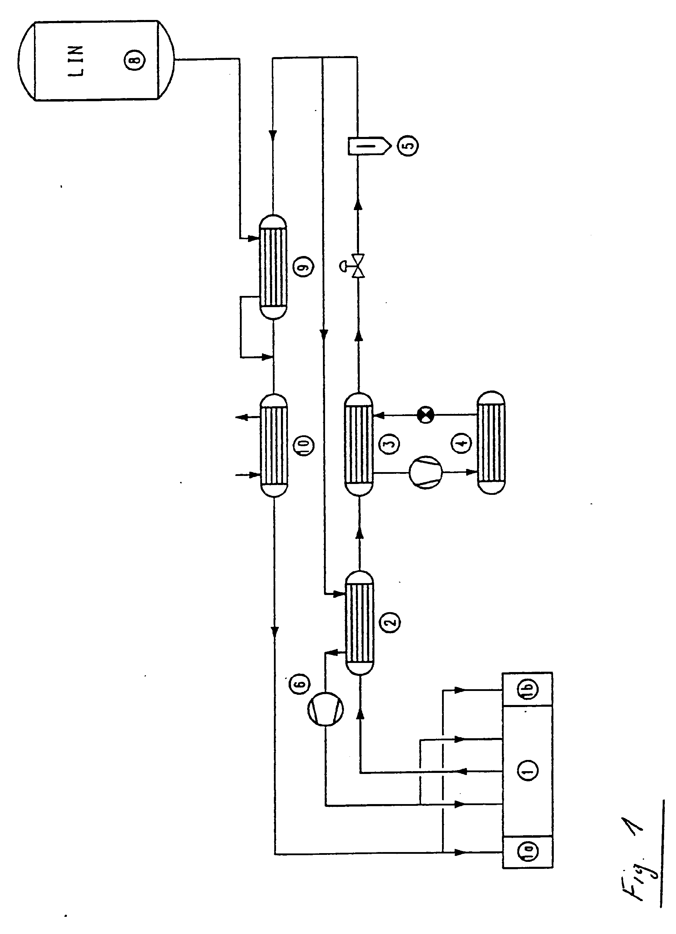

Der Grundaufbau einer solchen Rückgewinnungsanlage für die Entsorgung bzw. Versorgung eines Trockners 1 ist aus Figur 1 ersichtlich. Der dort dargestellte Trockner 1 wird kontinuierlich oder chargenweise mit den zu trocknenden Artikeln, beispielsweise Video- oder Audio-Bändern, beschickt und weist an seinem Einlaß und seinem Auslaß Schleusen 1 a, 1 b auf, die mit Stickstoff versorgt werden und deshalb einen Schutzvorhang zwischen der Lösungsmittelatmosphäre im Innern des Trockners 1 und der Umgebungsluft bilden.

Der im Trockner 1 anfallende, lösungsmittelbeladene Stickstoff wird einem Wärmetauscher 2 der Lösungsmittelrückgewinnungsanlage zugeführt, wo dieses Gemisch vorgekühlt wird. Hochsiedende Komponenten werden in dem Wärmetauscher 2 entsprechend der Dampfdruckkurve kondensiert. Außerdem dient der Wärmetauscher 2 noch zur Wärmerückgewinnung.

Das vorgekühlte und von hochsiedenden Komponenten befreite Gemisch Lösungsmittel/Stickstoff gelangt von dem Wärmetauscher 2 in einen Lösungsmittelkondensator 3, in dem der Hauptanteil des Lösungsmittels gegen Fremdkälte kondensiert wird. Die Fremdkälte wird hierbei von dem Verdampfer 3 einer Kältemaschine mit Kältemittelkondensator 4 geliefert.

Von dem Verdampfer 3 gelangt das Zweiphasengemisch flüssiges Lösungsmittel/gasförmiger Stickstoff in einen Lösungsmittelabscheider 5, wo das Lösungsmittel von dem Stickstoff getrennt wird; der vorgereinigte Stickstoff strömt von dem Abscheider 5 zurück in den Wärmetauscher 2 und wird dort im Wärmetausch mit dem aus dem Trockner 1 abgezogenen Gemisch Lösungsmittel/Stickstoff erwärmt. Ein Ventilator 6 saugt den Stickstoff aus dem Wärmetauscher 2 ab und führt ihn zurück in den Trockner 1.

Das im Abscheider 5 angefallene, zurückgewonnene Lösungsmittel wird in einem Behälter zwischengelagert und in der Regel mit einer Pumpe zum Tanklager für das Lösungsmittel zurückgepumpt (nicht dargestellt).

Damit in den Trockner 1 kein Sauerstoff einbrechen und das Lösungsmittel den Trockner 1 auch nicht verlassen kann, werden die Schleusen 1 a, 1 b des Trockners mit Stickstoff beaufschlagt, um in beiden Richtungen nach draußen vor die Schleusen und nach innen in den Trockner 1 einen positiven Fluß zu erzeugen.

Der hierzu erforderliche Spülstickstoff wird, um einen positiven Fluß von den Schleusen 1 a, 1 b in den Trockner 1 zu gewährleisten, dem Stickstoff-Kreislauf ständig hinter dem Abscheider 5 entzogen; dieser Entnahmestickstoff enthält jedoch entsprechend der Dampfdruckkurve noch soviel Lösungsmittel, daß dieses Gasgemisch noch nicht in die Umgebung abgeleitet werden darf.

Deshalb wird dieses Gasgemisch in einem Tieftemperaturteil 9 stark unterkühlt und damit soweit vom Lösungsmittel gereinigt, bis der Lösungsmittelanteil dieses Gasgemisches unterhalb der gesetzlichen Werte liegt. Die hierzu erforderliche Kälte wird durch flüssigen Stickstoff, der dem Tank 8 entnommen wird, zur Verfügung gestellt.

Der dem Tank 8 entnommene, nunmehr verdampfte Stickstoff wird gemeinsam mit dem gereinigten Entnahmestickstoff nach Erwärmung in einem weiteren Wäremtauscher 10 zu den Schleusen 1 a, 1 b geführt.

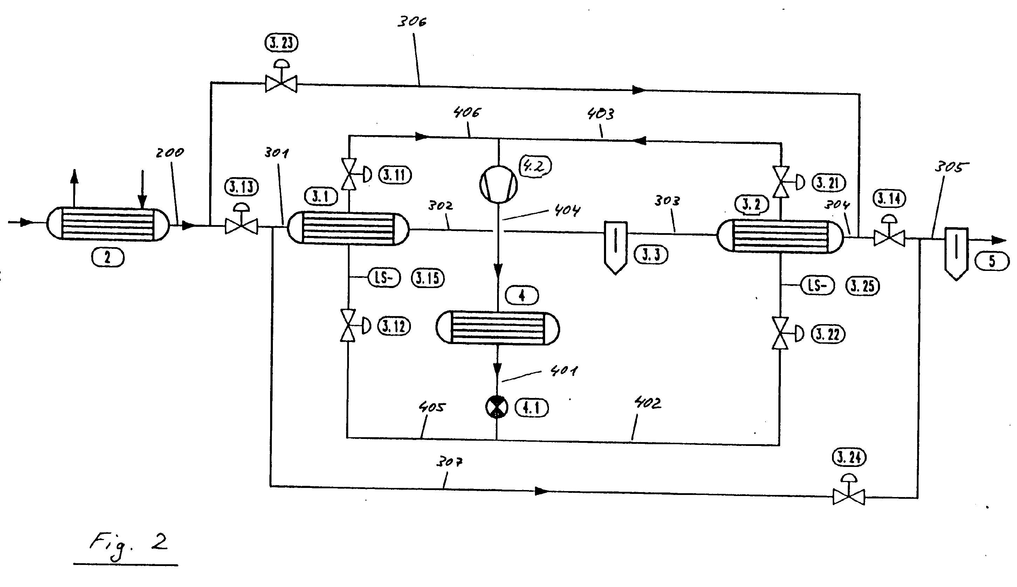

Fig. 2 zeigt den schematischen Aufbau des Lösungsmittelkondensators 3 bzw. der Lösungsmittelkondensatoranordnung 3.1, 3.2. gemäß Fig. 1.

Dabei werden, soweit möglich, die gleichen Bezugszeichen wie in Figur 1 verwendet, so daß die entsprechenden Komponenten nicht nochmals beschrieben werden müssen. Der Trockner 1 mit den Schleusen 1 a, 1 b und der Stickstoffzuführung ist in Figur 2 nicht nochmals dargestellt.

Bei der Anlage nach Figur 2 gelangt das Trägergas/Lösungsmittel-Gemisch mit vorzugsweise Stickstoff als Trägergas über den Wärmetauscher 2 in den Gemischkreislauf und passiert über geöffnete Ventile 3.13 und 3.14 bei geschlossenen Ventilen 3.23 und 3.24 nacheinander die Lösungsmittelkondensatoren 3.1 und 3.2 oder bei geöffneten Ventilen 3.23 und 3.24 und geschlossenen Ventilen 3.13 und 3.14 nacheinander die Lösungsmittelkondensatoren 3.2 und 3.1. Diese Lösungsmittelkondensatoren 3.1, 3.2 sind als überflutete Verdampfer ausgebildet.

Zwischen den beiden Lösungsmittelkondensatoren 3.1 und 3.2 ist ein in beiden Strömungsrichtungen des Gasgemisches wirksamer Flüssigkeitsabscheider 3.3 zum Abfangen des auskondensierenden Lösungsmittels und Wassers vorgesehen.

Der Kondensator 4 einer Kältemaschine versorgt über ein Schwimmerventil 4.1 und wahlweise ein Ventil 3.12 bzw. 3.22 den jeweils in Betrieb befindlichen Lösungsmittelkondensator 3.1 bzw. 3.2 mit Kältemittel, vorzugsweise Frigen. Nach der Verdampfung wird das Kältemittel über die Ventile 3.11 bzw. 3.21 von einem Verdichter 4.2 angesaugt und wieder dem Kondensator 4 zugeführt.

Nachfolgend wird ein Betriebs- und Abtauzyklus beschrieben.

Zu Beginn des Zyklus ist der Lösungsmittelkondensator 3.1 auf Abtauen und der Lösungsmittelkondensator 3.2 auf Betrieb geschaltet.

Im Trägergas/Lösungsmittelkreislauf sind dann die Ventile 3.13, 3.14 geöffnet und die Ventile 3.23 und 3.24 geschlossen.

Der Weg des Gemisches Stickstoff/Lösungsmittel führt vom Wärmetauscher 2, wo es vorgekühlt und von hochsiedenden Lösungsmittelkomponenten bereits befreit wird, über die Leitungen 200 und 301, den Lösungsmittelkondensator 3.1, die Leitung 302, Lösungsmittelabscheider 3.3 und die Leitung 303 in den in Betrieb befindlichen Lösungsmittelkondensator 3.2, aus dem es als Zweiphasengemisch aus gasförmigem Stickstoff und flüssigem Lösungsmittel austritt und über die Leitungen 304 und 305 zum Lösungsmittelabscheider 5 gelangt.

Im Kältemittelkreislauf sind die Ventile 3.11, 3.21, 3.22 geöffnet und das Ventil 3.12 geschlossen. Der Lösungsmittelkondensator 3.2 ist mit Kältemittel gefüllt, der Lösungsmittelkondensator 3.1 ist leer. Aus dem Kondensator 4 einer Kältemaschine wird der Lösungsmittelkondensator 3.2 über Leitung 401, das Schwimmerventil 4.1 und Leitung 402 mit flüssigem Frigen versorgt. Das im Lösungsmittelkondensator 3.2 verdampfte Frigen wird über Leitung 403 vom Verdichter 4.2 angesaugt und wieder dem Kondensator 4 der Kältemaschine zur Verflüssigung des Frigens zugeführt.

Beim Umschalten werden im Stickstoff/Lösungsmittelkreislauf die Ventile 3.13 und 3.14 geschlossen sowie 3.23 und 3.24 geöffnet. Hierdurch wird die Fließrichtung des Stickstoff/Lösungsmittel-Gemisches durch die Lösungsmittelkondensatoren von "3.1 nach 3.2" auf "3.2 nach 3.1" umgekehrt. Nun gelangt das Stickstoff/Lösungsmittel-Gemisch vom Wärmetauscher 2 über die Leitungen 200, 306 und 304 zuerst zum Lösungsmittelkondensator 3.2. Trotz Vorkühlung durch Wärmetauscher 2, ist das Gemisch noch so warm, daß damit die während des vorhergehenden Betriebszustandes des Lösungsmittelkondensator 3.2 ausgefrorenen Lösungsmittelbestandteile und Wasseranteile aufgetaut werden. Diese werden dann mit dem Stickstoff/Lösungsmittel-Gemisch über die Leitung 303 dem Lösungsmittelabscheider 3.3 zugeführt und dort vom gasförmigen Stickstoff/Lösungsmittel-Gemisch getrennt. Das gasförmige Gemisch gelangt über die Leitung 302 zum nun in Betrieb befindlichen Lösungsmittelkondensator 3.1. Das austretende Zweiphasengemisch aus gasförmigem Stickstoff und flüssigem Lösungsmittel wird schließlich über die Leitung 307 zum Lösungsmittelabscheider 5 geführt.

Im Kältemittelkreislauf wird beim Umschalten das Ventil 3.21 geschlossen und das Ventil 3.12 geöffnet. Da der Lösungsmittelkondensator 3.2 nun als erster in Wärmetausch mit dem noch warmen Stickstoff/Lösungsmittel-Gemisch tritt, steigt dort der Dampfdruck des Kältemittels an und schiebt das flüssige Frigen über die geöffneten Ventile 3.22 und 3.12 in den Lösungsmittelkondensator 3.1. Sobald dieser Vorgang beendet ist, wird durch ein Schaltelement 3.25, das den Flüssigkeitsspiegel des Frigens im Lösungsmittelkondensator 3.2 kontrolliert, das Ventil 3.22 geschlossen und das Ventil 3.21 geöffnet. Das noch im Lösungsmittelkondensator 3.2 verbliebene, verdampfte Frigen wird zusammen mit dem im Lösungsmittelkondensator 3.1 verdampfenden Frigen vom Verdichter 4.2 angesaugt und dem Kondensator 4 der Kältemaschine zugeführt. Vom Kondensator 4 über das Schwimmerventil 4.1 und die Leitung 405 wird nun der Lösungsmittelkondensator 3.1 mit flüssigem Frigen versorgt. Damit ist die Umschaltphase beendet und somit der Lösungsmittelkondensator 3.1 in Betrieb während 3.2 abtaut.

Bei der nächsten Umschaltphase werden die Ventile 3.13 und 3.14 geöffnet sowie 3.23 und 3.24 geschlossen. Dadurch wird die Fließrichtung des Trägergas/Lösungsmittel-Gemisches umgekehrt. Gleichzeitig wird im Kältemittelkreislauf das Ventil 3.11 geschlossen und 3.22 geöffnet. Durch den damit verbundenen Druckanstieg des Kältemittels im Lösungsmittelkondensator 3.1 wird das Kältemittel über die geöffneten Ventile 3.12 und 3.22 in den Lösungsmittelkondensator 3.2 gedrückt. Nachdem der Lösungsmittelkondensator 3.1 von flüssigem Kältemittel entleert ist, wird kontrolliert durch ein weiteres Schaltelement 3.15, das mit dem erwähnten Schaltelement 3.25 gekoppelt oder zu einer gemeinsamen Schaltung oder Steuerung verbunden sein kann, das Ventil 3.12 geschlossen und das Ventil 3.11 geöffnet. Damit ist ein voller Zyklus abgeschlossen.

## Patentansprüche

1. Verfahren zur Rückgewinnung eines Lösungsmittels aus einem Trägergas/Lösungsmittel-Gemisch, bei dem
a) einem als Kältemittelverdampfer (3; 3.1, 3.2) ausgebildeten Lösungsmittelkondensator (3; 3.1, 3.2) ein flüssiges Kältemittel zugeführt und Kältemitteldampf daraus abgeführt wird,
b) das Gemisch den Lösungsmittelkondensator (3; 3.1, 3.2) durchströmt und Lösungsmittel im Betriebszustand des Lösungsmittelkondensators (3; 3.1, 3.2) durch indirekten Wärmeaustausch mit dem verdampfenden Kältemittel kondensiert wird, und bei dem
c) die Kältemittelzufuhr beim Umschalten des Lösungsmittelkondensators (3; 3.1, 3.2) in den Abtauzustand unterbrochen und Kältemittel durch die Wärme des weiterhin den Lösungsmittelkondensator (3; 3.1, 3.2) durchströmenden Gemisches verdampft wird,
**dadurch gekennzeichnet, daß**
d) als Kältemittelverdampfer (3; 3.1, 3.2) ein überfluteter Kältemittelverdampfer (3; 3.1, 3.2) verwendet wird, und daß
e) beim Umschalten des Lösungsmittelkondensators (3; 3.1, 3.2) in den Abtauzustand der Auslaß für Kältemitteldampf abgesperrt und das flüssige Kältemittel durch den dadurch erhöhten Druck über dessen Zuführung aus dem Kältemittelverdampfer (3; 3.1, 3.2) verlagert wird.

2. Verfahren nach Anspruch 1, **dadurch gekennzeichnet, daß** beim Umschalten des Lösungsmittelkondensators (3; 3.1, 3.2) vom Betriebs- in den Abtauzustand der Einlaß für das flüssige Kältemittel abgesperrt und der Auslaß für das verdampfte Kältemittel geöffnet werden, sobald das flüssige Kältemittel aus dem Lösungsmittelkondensator (3; 3.1, 3.2) verlagert worden ist.

3. Verfahren nach Anspruch 1 oder 2, dadurch gekennzeichnet, daß zumindest zwei durch überflutete Kältemittelverdampfer gebildete Lösungsmittelkondensatoren (3.1, 3.2) vorgesehen sind, von denen sich jeweils zumindest ein Kondensator im Betriebs- und ein anderer im Abtauzustand befindet.

4. Verfahren nach Anspruch 3, dadurch gekennzeichnet, daß das Kältemittel beim Umschalten von dem Betriebs- in den Abtauzustand jeweils von dem einen in den anderen Lösungsmittelkondensator (3.1, 3.2) verlagert wird.

5. Verfahren nach Anspruch 3 oder 4, dadurch gekennzeichnet, daß zuerst der abtauende und danach der betriebene Lösungsmittelkondensator (3.1, 3.2) von dem Trägergas/Lösungsmittel-Gemisch durchströmt wird und die Strömungsrichtung des Trägergas/Lösungsmittel-Gemisches durch die Lösungsmittelkondensatoren (3.1, 3.2) gleichzeitig mit dem Wechsel zwischen dem Abtau- und dem Betriebszustand umgekehrt wird.

6. Vorrichtung zur Durchführung des Verfahrens nach einem der vorhergehenden Ansprüche mit zumindest einem Lösungsmittelkondensator (3; 3.1, 3.2) für die Kondensation eines in einem Trägergas/Lösungsmittel-Gemisch enthaltenen Lösungsmittels durch indirekten Wärmeaustausch des Gemisches mit einem flüssigen Kältemittel, wobei der Lösungsmittelkondensator (3; 3.1, 3.2) als Kältemittelverdampfer (3; 3.1, 3.2) mit einem absperrbaren Einlaß für die Zufuhr des flüssigen Kältemittels und einem Auslaß für das bei dem Wärmeaustausch verdampfte Kältemittel ausgebildet ist,
**dadurch gekennzeichnet, daß**
der Kältemittelverdampfer (3; 3.1, 3.2) durch einen überfluteten Kältemittelverdampfer (3; 3.1, 3.2) gebildet wird, dessen Auslaß für das verdampfte Kältemittel absperrbar ist.

7. Vorrichtung nach Anspruch 6, dadurch gekennzeichnet, daß der Lösungsmittelkondensator (3; 3.1, 3.2) durch einen Kältemittelverdampfer einer Kältemaschine gebildet und über ein Schwimmerventil (4.1) von einem Kondensator (4) der Kältemaschine mit Kältemittel versorgt wird.

8. Vorrichtung nach einem der Ansprüche 6 oder 7, dadurch gekennzeichnet, daß jeder Lösungsmittelkondensator (3; 3.1, 3.2) ein Ventil (3.11, 3.21) zum Absperren des Auslasses für das verdampfte Kältemittel und ein Ventil (3.12, 3.22) zum Absperren des Einlasses für das flüssige Kältemittel aufweist, die durch ein in Abhängigkeit vom Kältemittelfüllstand des Lösungsmittelkondensators (3; 3.1, 3.2) betätigbares Schaltelement (3.15, 3.25) stellbar sind.

9. Vorrichtung nach einem der Ansprüche 6 bis 8, dadurch gekennzeichnet, daß mindestens zwei als überflutete Kältemittelverdampfer ausgebildete Lösungsmittelkondensatoren (3.1, 3.2) vorgesehen sind.

10. Vorrichtung nach Anspruch 9, dadurch gekennzeichnet, daß jeder Lösungsmittelkondensator (3.1, 3.2) ein Einlaßventil (3.13, 3.23) und ein Auslaßventil (3.14, 3.24) für das Trägergas/Lösungsmittel-Gemisch aufweist und jeweils ein Einlaßventil (3.13, 3.23) des einen Kondensators (3.1, 3.2) und ein Auslaßventil (3.14, 3.24) des anderen Kondensators (3.1, 3.2) gemeinsam, aber in Wechselschaltung zu dem verbleibenden Ventilpaar (3.13, 3.14 oder 3.23, 3.24) stellbar sind.

11. Vorrichtung nach Anspruch 9 oder 10, dadurch gekennzeichnet, daß zwischen den Lösungsmittelkondensatoren (3.1, 3.2) ein in beiden Strömungsrichtungen des Trägergas/Lösungsmittel-Gemisches wirksamer Flüssigkeitsabscheider (3.3) angeordnet ist.

12. Vorrichtung nach einem der Ansprüche 6 bis 11, dadurch gekennzeichnet, daß das Trägergas/Lösungsmittel-Gemisch vor der Einleitung in den Lösungsmittelkondensator (3; 3.1, 3.2) in einem Wärmetauscher (2) vorgekühlt wird.

## Claims

1. A method for recovering a solvent from a carrier gas/solvent mixture, in which
a) a liquid refrigerant is supplied to a solvent condenser (3; 3.1, 3.2) formed as refrigerant evaporator (3; 3.1, 3.2) and refrigerant vapor is removed therefrom;
b) the mixture flows through the solvent condenser (3; 3.1, 3.2) and solvent is condensed in the operational state of the solvent condenser (3; 3.1, 3.2) by indirect heat exchange with the evaporatoring refrigerant, and in which
c) the refrigerant supply is interrupted upon switching the solvent condenser (3; 3.1, 3.2) to the defreeze state and refrigerant is evaporated by the heat of the mixture still flowing through the solvent condenser (3; 3.1, 3.2),
**characterized in** that
d) a flooded refrigerant evaporator (3; 3.1, 3.2) is used as refrigerant evaporator (3; 3.1, 3.2), and that
e) when switching the solvent condenser (3; 3.1, 3.2) into the defreeze state, the outlet for refrigerant vapor is shut off and the liquid refrigerant is displaced due to the thereby increased pressure rise via its supply out of the solvent evaporator (3; 3.1, 3.2).

2. A method according to claim 1, **characterized in** that when switching the solvent condenser (3; 3.1, 3.2) from the operational state to the defreeze state the inlet for the liquid refrigerant is shut off and the outlet for the evaporated refrigerant is opened as soon as the liquid refrigerant has been displaced out of the solvent condenser (3; 3.1, 3.2).

3. A method according to claim 1 or 2, **characterized in** that at least two solvent condensers (3.1, 3.2) formed by flooded refrigerant evaporators are provided, of which at least one condenser is in the operational state and the other is in the defreeze state.

4. A method according to claim 3, **characterized in** that the refrigerant is displaced from one solvent condenser (3.1, 3.2) to the other upon switching from the operational to the defreeze state.

5. A method according to claim 3 or 4, **characterized in** that the carrier gas/solvent mixture flows first through the defreezing and thereafter the operating solvent condenser (3.1, 3.2) and the flow direction of the carrier gas/solvent mixure through the solvent condensers (3.1, 3.2) is reversed simultaneously with the switch between the defreeze and the operational state.

6. An apparatus for performing the method according to one of the previous claims comprising at least one solvent condenser (3; 3.1, 3.2) for the condensation of a solvent contained in a carrier gas/solvent mixture by indirect heat exchange of the mixture with a liquid refrigerant, the solvent condenser (3; 3.1, 3.2) being formed as refrigerant evaporator (3; 3.1, 3.2) with a shut-offable inlet for the supply of the liquid refrigerant and an outlet for the refrigerant evaporated in the heat exchange,
**characterized in** that
the refrigerant evaporator (3; 3.1, 3.2) is formed by a flooded refrigerant evaporator (3; 3.1, 3.2), the outlet for the evaporated refriger-ant of which can be shut-off.

7. An apparatus according to claim 6, **characterized in** that the solvent condenser (3; 3.1, 3.2) is formed by a refrigerant evaporator of a refrigerating machine and is supplied with refrigerant via a swimmer valve (4.1) from a condenser (4) of the refrigerating machine.

8. An apparatus according to one of the claims 6 or 7, **charac****terized in** that each solvent condenser (3; 3.1, 3.2) comprises a valve (3.11, 3.21) to shut off the outlet for the evaporated refrigerant and a valve (3.12, 3.22) to shut off the inlet for the liquid refrigerant, which are settable by a switching element (3.15, 3.25) actuatable in dependence on the filling level of the refrigerant of the solvent condenser (3; 3.1, 3.2).

9. An apparatus according to one of the claims 6 to 8, **charac****terized in** that at least two solvent condensers (3.1, 3.2) formed as flooded refrigerant evaporators are provided.

10. An apparatus according to claim 9, **characterized in** that each solvent condenser (3.1, 3.2) comprises an inlet valve (3.13, 3.23) and an outlet valve (3.14, 3.24) for the carrier gas/solvent mixture, and one inlet valve each (3.13, 3.23) of the one condenser (3.1, 3.2) and one outlet valve (3.14, 3.24) of the other condenser (3.1, 3.2) are actuable jointly, but in alternating connection with the remaining valve pair (3.13, 3.14 or 3.23, 3.24).

11. An apparatus according to claim 9 or 10, **characterized** **in** that a liquid depositor (3.3) effective in both flow directions of the carrier gas/solvent mixture is arranged between the solvent condensers (3.1, 3.2).

12. An apparatus according to one of the claims 6 to 11, **char****acterized in** that the carrier gas/solvent mixture is precooled in a heat exchanger (2) prior to the introduction into the solvent condenser (3; 3.1, 3.2).

## Revendications

1. Procédé de récupération d'un solvant hors d'un mélange de gaz porteur et de solvant, dans lequel
a) un agent de refroidissement liquide est amené à un condenseur de solvant (3; 3.1, 3.2) configuré comme évaporateur d'agent de refroidissement (3; 3.1; 3.2), des vapeurs d'agent de refroidissement en étant extraites,
b) le mélange traverse le condenseur de solvant (3; 3.1, 3.2) et lorsque le condenseur de solvant (3; 3.1, 3.2) est en exploitation, le solvant est condensé par échange thermique indirect avec l'agent de refroidissement vaporisé, et dans lequel
c) l'amenée d'agent de refroidissement est interrompue lors du passage du condenseur de solvant (3; 3.1, 3.2) à l'état de dégivrage, et l'agent de refroidissement est vaporisé par la chaleur du mélange continuant à traverser le condenseur de solvant (3; 3.1, 3.2),
caractérisé en ce que:
d) on utilise comme évaporateur d'agent de refroidissement (3; 3.1, 3.2) un évaporateur noyé d'agent de refroidissement (3; 3.1, 3.2), et en ce que
e) lors du passage du condenseur de solvant (3; 3.1, 3.2) dans l'état de dégivrage, la sortie pour les vapeurs d'agent de refroidissement est fermée, et l'agent de refroidissement liquide est déplacé hors de l'évaporateur d'agent de refroidissement (3; 3.1, 3.2) par la pression ainsi rehaussée par son amenée.

2. Procédé selon la revendication 1, caractérisé en ce que lors du passage du condenseur de solvant (3; 3.1, 3.2) de l'état d'exploitation à l'état de dégivrage, l'entrée pour l'agent de refroidissement liquide est fermée et la sortie pour l'agent de refroidissement vaporisé est ouverte dès que l'agent de refroidissement liquide a été déplacé hors du condenseur de solvant (3; 3.1, 3.2).

3. Procédé selon la revendication 1 ou 2, caractérisé en ce qu'au moins deux condenseurs de solvant (3.1, 3.2) configurés comme évaporateurs noyés d'agent de refroidissement sont prévus, dont au moins un condenseur se trouve chaque fois en état d'exploitation et l'autre en état de dégivrage.

4. Procédé selon la revendication 3, caractérisé en ce que lors du passage de l'état d'exploitation à l'état de dégivrage, l'agent de refroidissement est chaque fois déplacé de l'un dans l'autre des condenseurs d'agent de refroidissement (3.1, 3.2)

5. Procédé selon la revendication 3 ou 4, caractérisé en ce que le condenseur de solvant (3.1, 3.2) en dégivrage est traversé le premier par le mélange de gaz porteur et de solvant, le condenseur de solvant (3.1, 3.2) en exploitation l'étant en second lieu, la direction d'écoulement du mélange de gaz porteur et de solvant à travers les condenseurs de solvant (3.1, 3.2) étant inversée en même temps que l'alternance entre l'état de dégivrage et l'état d'exploitation.

6. Dispositif en vue d'exécuter le procédé selon l'une des revendications précédentes, comportant au moins un condenseur de solvant (3; 3.1, 3.2) pour la condensation d'un solvant contenu dans un mélange de gaz porteur et de solvant, par échange thermique indirect du mélange avec un agent de refroidissement liquide, le condenseur de solvant (3; 3.1, 3.2), configuré comme évaporateur d'agent de refroidissement (3; 3.1, 3.2), comportant une entrée refermable pour l'amenée de l'agent de refroidissement liquide et une sortie pour l'agent de refroidissement évaporé lors de l'échange thermique, caractérisé en ce que
l'évaporateur d'agent de refroidissement (3; 3.1, 3.2) est constitué d'un évaporateur noyé d'agent de refroidissement (3; 3.1, 3.2) dont la sortie pour l'agent de refroidissement peut être fermée.

7. Dispositif selon la revendication 6, caractérisé en ce que le condenseur de solvant (3; 3.1, 3.2) est formé par un évaporateur d'agent de refroidissement d'une machine frigorifique, et est alimenté en agent de refroidissement par l'intermédiaire d'une vanne à flotteur (4.1) d'un condenseur (4) de la machine frigorifique.

8. Dispositif selon l'une des revendications 6 à 7, caractérisé en ce que chaque condenseur de solvant (3; 3.1, 3.2) présente une vanne (3.11, 3.21) pour la fermeture de la sortie pour l'agent de refroidissement évaporé et une vanne (3.12, 3.22) pour la fermeture de l'entrée pour l'agent de refroidissement liquide, qui peuvent être actionnées par un élément de commutation (3.15, 3.25) actionné sous la dépendance de l'état de remplissage en agent de refroidissement du condenseur de solvant (3; 3.1, 3.2).

9. Dispositif selon l'une des revendications 6 à 8, caractérisé en ce qu'au moins deux condenseurs d'agent de refroidissement (3.1, 3.2), configurés comme évaporateurs noyés d'agent de refroidissement, sont prévus.

10. Dispositif selon la revendication 9, caractérisé en ce que chaque condenseur d'agent de refroidissement (3.1, 3.2) présente une vanne d'entrée (3.13, 3.23) et une vanne de sortie (3.14, 3.24) pour le mélange de gaz porteur et de solvant, et chaque fois une vanne d'entrée (3.13, 3.23) de l'un des condenseurs (3.1, 3.2) et une vanne de sortie (3.14, 3.24) de l'autre condenseur (3.1, 3.2) peuvent être actionnés ensemble, mais en commutation alternée par rapport à la paire restante de clapets (3.13, 3.14 ou 3.23, 3.24).

11. Dispositif selon la revendication 9 ou 10, caractérisé en ce qu'entre les condenseurs de solvant (3.1, 3.2) est disposé un séparateur de liquide (3.3) actif dans les deux directions d'écoulement du mélange de gaz porteur et de solvant.

12. Dispositif selon l'une des revendications 6 à 11, caractérisé en ce que le mélange de gaz porteur et de solvant est pré-refroidi dans un échangeur de chaleur (2) avant son introduction dans le condenseur de solvant (3; 3.1, 3.2).
